# EUROPEAN PATENT SPECIFICATION

(11) **EP 3 554 761 B1**
(45) Date of publication and mention of the grant of the patent: **03.02.2021**
(21) Application number: 17808465.3
(22) Date of filing: 04.12.2017
(51) Int. Cl.: B25B 21/00, B25B 23/147

(54) **METHOD, MONITORING NODE AND COMPUTER PROGRAM OF MONITORING ENERGY FLOW IN A TIGHTENING TOOL**
VERFAHREN, ÜBERWACHUNGSKNOTEN UND COMPUTERPROGRAMM ZUR ÜBERWACHUNG DES ENERGIEFLUSSES IN EINEM SPANNWERKZEUG
PROCÉDÉ, NOEUD DE SURVEILLANCE ET PROGRAMME INFORMATIQUE DE SURVEILLANCE DE FLUX D'ÉNERGIE DANS UN OUTIL DE SERRAGE

(30) Priority: 15.12.2016 SE 1630297
(43) Date of publication of application: 23.10.2019
(73) Proprietor: Atlas Copco Industrial Technique AB, 105 23 Stockholm (SE)
(72) Inventor: DANEBERGS, Andris, 79023 Svärdsjö (SE)
(74) Representative: Tholin, Thomas
(86) International application number: PCT/EP2017/081286
(87) International publication number: WO 2018/108593

(56) References cited:
- EP-A1- 2 248 632
- US-A1- 2015 247 745
- US-A1- 2016 129 569
- US-A1- 2016 318 164

## Description

### Technical field

The present invention relates generally to a method, a monitoring node and a computer program of monitoring energy flow in a tightening tool.

### Background art

Tightening tools and systems with tightening tools, including portable tightening tools such as power wrenches operated by an operator, are often used in production work. A common application is in assembly lines. Nowadays, tightening tools in assembly lines may have a controller connected to them and the controller controls the work performed by the tool so that the tool works automatically. With other words the controller sees to that the tool is operated correctly, e.g. performing a wrench operation with the correct torque etc.

Sometimes it is necessary to update the controller with new information. For example, the tools may have to perform new operations, change dimensions or torque or just adjust the current operation for a better performance.

In WO2016001210 there is disclosed a tool communications network for enabling remote control of tightening tools. This tool communications network is very useful for performing updates to many tool controllers at the same time, minimizing the time of an operator during the update. The mentioned tool communication network may also be used by the tool controllers to collect data of the result of work performed by the tightening tools, such as collecting the torque used for tightening a bolt or nut. Collecting such data is valuable for increasing traceability of products produced in an assembly line. Thus, the tool communication network has greatly improved the efficiency and quality of work at assembly lines. Document US2015247745 discloses a similar system and method for interaction with smart tools.

However, there are still improvements to be done. Such improvement areas may be to foresee or detect impending tool failure, detect variations in material of the product assembled at the assembly line and operator behavior at a manufacturing station of the assembly line. Today, a production technician may through experience know what station in the assembly line that usually has problems with tool usage or with operator behavior. This experience may be gained by observing the operators and/or looking at error codes displayed by the tightening system and other equipment. Observing operator behavior and error codes to gain an overview of the assembly line requires a lot of experience and also time from the production technician. Since the production technician only can be at one place at a time it will not only be difficult, but impossible, to observe the whole assembly line at once. This will lead to disturbances in the production, since there will be failures due to defective tightening tools, wrong operator behavior or material deficiencies.

Thus, there is a need to get a better overview of an assembly line in order to foresee and reduce failures that may lead to interrupted production.

### Summary

It is an object of the present invention to address at least some of the problems and issues outlined above. It is possible to achieve these objects and others by using a method, a monitoring node and a computer program for monitoring energy flow in a tightening tool.

According to one aspect, a method is provided performed by a monitoring node that is associated with a tool communication network to which also the tightening tool is connected. The method comprises receiving, from the tightening tool, parameter values relating to current fed into the tightening tool, angle of a rotor in the tightening tool and torque applied to a joint by the tightening tool, calculating the energy put into to the tightening tool based on the received parameter values relating to the current fed into the tightening tool and the angle of the rotor in the tightening tool, and calculating the energy transferred to the joint by the tightening tool based on the received parameter values relating to the torque applied to the joint by the tightening tool and the angle of the rotor in the tightening tool. The method furthermore comprises detecting that the calculated energy put into to the tightening tool deviates from the calculated energy transferred to the joint by the tightening tool with more than a predetermined value.

In an embodiment the method also comprises transmitting an alarm message in response to detecting that the calculated energy put into to the tightening tool deviates from the calculated energy transferred to the joint by the tightening tool with more than a predetermined value.

In another embodiment the method comprises sending a request for parameter values to the tightening tool, via the communication network.

In yet another embodiment the receiving step of the method further comprises receiving, from the tightening tool, a parameter value relating to a temperature of the tightening tool, and calculating the predetermined value such that it correlates with the parameter value relating to the temperature of the tightening tool, i.e. increasing temperature leads to increasing predetermined value.

In a further embodiment the receiving step of the method comprises receiving, from a second tightening tool connected to the communication network, a parameter value relating to a temperature of the second tightening tool, the detecting step further comprises detecting that the parameter value relating to the temperature of the tightening tool deviates with more than a predetermined temperature range from the parameter value relating to the temperature of the second tightening tool and wherein transmitting the alarm message comprises transmitting information about the deviation in the parameter values relating to the temperatures of the tightening tool and the second tightening tool.

In another embodiment the method comprises retrieving, a parameter value relating to desired tightening torque for tightening the joint, and detecting that the retrieved parameter value relating to the desired tightening torque deviates from the received parameter value for the torque applied to the joint by the tightening tool and wherein transmitting the alarm message comprises transmitting information that the desired tightening torque deviates from the received parameter value for the torque applied to the joint by the tightening tool.

According to another aspect a monitoring node for monitoring energy flow in a tightening tool and associated with a tool communication network is provided. The tightening tool is also connected to the communications network. The monitoring node comprises a processor and a memory, the memory comprising instructions which when executed by the processor causes the monitoring node to receive, from the tightening tool, parameter values relating to current fed into the tightening tool, angle of a rotor in the tightening tool and torque applied to a joint by the tightening, calculate the energy put into to the tightening tool based on the received parameter values relating to the current fed into the tightening tool and the angle of the rotor in the tightening tool and calculate the energy transferred to the joint by the tightening tool based on the received parameter values relating to the torque applied to the joint by the tightening tool and the angle of the rotor in the tightening tool. The monitoring node is further caused to detect that the calculated energy put into to the tightening tool deviates from the calculated energy transferred to the joint by the tightening tool with more than a predetermined value.

In an embodiment the monitoring node is further caused to transmit an alarm message in response to detecting that the calculated energy put into the tightening tool deviates from the calculated energy transferred to the joint by the tightening tool with more than a predetermined value.

The monitoring node is, in another embodiment, caused to send a request for parameter values to the tightening tool, via the communication network.

In yet another embodiment the monitoring node is further caused to receive, from the tightening tool, a parameter value relating to a temperature of the tightening tool and calculate the predetermined value such that it correlates with the parameter value relating to the temperature of the tightening tool, i.e. increasing temperature leads to increasing predetermined value.

In another embodiment the monitoring node is further caused to receive, from a second tightening tool connected to the communication network, a parameter value relating to a temperature of the second tightening tool, detect that the parameter value relating to the temperature of the tightening tool deviates with more than a predetermined temperature range from the parameter value relating to the temperature of the second tightening tool and wherein transmitting the alarm message comprises transmitting information about the deviation in the parameter values relating to the temperatures of the tightening tool and the second tightening tool.

In a further embodiment the monitoring node is further caused to retrieve a parameter value relating to desired tightening torque for tightening the joint, detect that the received parameter value relating to the desired tightening torque deviates from the received parameter value for the torque applied to the joint by the tightening tool and wherein transmitting the alarm message comprises transmitting information that the desired tightening torque is smaller than the received parameter value for the torque applied to the joint by the tightening tool.

According to another aspect, a computer program and a computer program product comprises computer readable code is provided, which when executed on a processor of the monitoring node causes the monitoring node to behave as a monitoring node described in previous sections.

Further possible features and benefits of this solution will become apparent from the detailed description below.

### Brief description of drawings

The solution will now be described in more detail by means of exemplary embodiments and with reference to the accompanying drawings, in which:
Fig. 1 is an overview of a tool communication network.
Fig 2 is a flowchart of a method according to one possible embodiment.
Fig. 3 is a flowchart of the method according to other possible embodiments.
Fig. 4 is a block diagram illustrating the monitoring node in more detail, according to possible embodiments.

### Detailed description

Briefly described, a solution is provided to enable monitoring energy flow in a tightening tool in order to foresee or detect impending tool failure, detect variations in material of the product assembled at the assembly line and operator behavior at a manufacturing station of the assembly line. In an environment where a number of tightening tools are used, normally controlled by controllers, the tightening tools may be configurable for different operations. A specific tightening tool may further be a part of a manufacturing station together with material for production, arrangements for material handling, different accessories or fittings for the tightening tool, and so forth. The tightening tool is part of a tool communication network. The tool communications network may be operated in a small manufacturing plant in a clean environment. The tool communications network may be operated in a manufacturing environment distributed over several buildings or remote locations. The tool communications network may be operated in a manufacturing environment in a factory with a challenging environment of dirt, aggressive chemicals, electrical disturbances, sometimes challenging for communication equipment and computers. A suitable tool communications network for use together with the present invention is described in greater detail in WO2016001210.

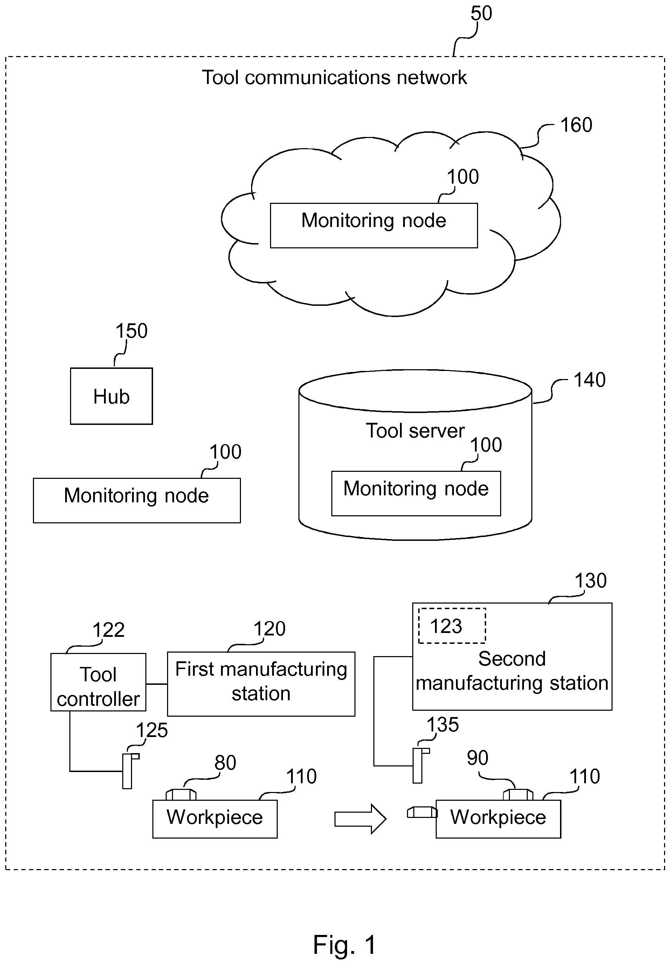

**Fig. 1** shows an overview of the tool communications network 50. The tool communications network 50 may comprise tightening tools 125, 135 (or other power tools), tool controllers 122, 123, a tool server 140, a communication node (hub) 150 and a monitoring node 100. In Fig. 1 three different types of monitoring nodes are shown, which will be described further below. The tool communication network 50 is set up to support different manufacturing stations 120, 130 that are part of an assembly line. Usually there are more than two manufacturing stations in an assembly line, but in Fig. 1 only two are shown in order to illustrate an explanatory tool communications network 50. Fig. 1 also shows a workpiece 110 having a first joint 80 (a bolt in Fig. 1) that is to be tighten at a first manufacturing station 120 and a second joint 90 to be tighten at a second manufacturing station 130.

The tightening tools 125, 135 are connected with a respective tool controller 122, 123 for control, supervision and collection of result data from the tightening tools 125, 135. The tightening tools 125, 135 may be set up for simple operations such as tightening bolts as mentioned above. However, the tightening tools 125, 135 may also be set up for more complex work operations including a number of similar and different operations, series of operations with one equipment, shifting to another equipment followed by another series of operations and may be shifting to a third equipment. How the tightening tools 125, 135 should perform operations and interact with an operator may be based on control data received from the tool controllers 122, 123. Each individual operation may need to be performed with high accuracy in terms of e.g. torque and rotation speed. In order to maintain desirable quality control all results may be collected by sensors, such as the number of rotations, final torque, location of operation, time, and similar result data for tightening tool operation.

The tool controllers 122, 123 controlling the tightening tools 125, 135 and accessory equipment have the primary task to control the tightening tools 125, 135. The tool controllers 122, 123 also manage configuration data and collect sensor data and store the sensor data as results of performed work operations. The tool controller 122, 123 may be a specific node for control of tightening tools 125, 135 or it may be for example a general purpose computer, which has been adapted for control of tightening tools. The tool controllers 122, 123 may be connected to the tool communication network 50 by wire as the tool controller 122 or wirelessly as schematically shown by tool controller 123. The tool controllers 122, 123 may also be termed controller, controller node, controlling node, control unit, tool processor, tool regulator, or similar terms. The tool controller 122, 123 may be co-located or comprised by a tightening tool 125, 135, a tool server 140, communication node 150, or other suitable technical nodes operating in a tool communications network 50.

The tool server 140 is a server to which production managers or production technicians may connect for creation and/or administration of work operations for the tightening tools 125, 135. The tool server 140 may be a general purpose server or a tool server 140 specifically arranged for remote control of tightening tools 125, 135. Administrators connecting to the tool server may for example create, specify and change how a particular tightening tool or a group of tightening tools 125, 135 should behave in certain situations. Examples are series of operations, tool selections, values for each operation like a torque rate, number of rotations, rotational speed, position and how to end when result data should be feed backed to a tool server 140, etc.

A communication node or hub 150 may be managing communication between different participating functional nodes or devices in the communications network 50. The communication node 150 may for example keep track of identities of tool controllers 122, tool servers 140, or tightening tools 125, 135. The communication node 150 may keep track of any nodes or devices alternating between "on line" and "off line". A tool controller 122 may for example not always be connected to a network for various reasons. The communication node 150 may further validate and/or authorize nodes or devices communicating in the communications network 50, such that only authorized nodes have the right to communicate with each other.

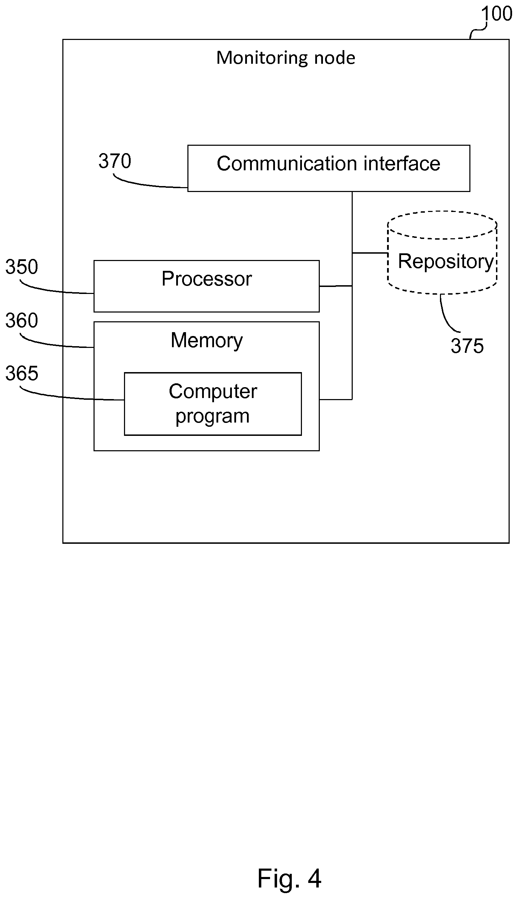

The monitoring node 100, which is configured to monitor energy flow in the tightening tools 125, 135 may be part of the tool server 140, be provided as part of a cloud solution or be provided as a stand-alone server. The monitoring node 100 will be closer described in conjunction with Fig. 4.

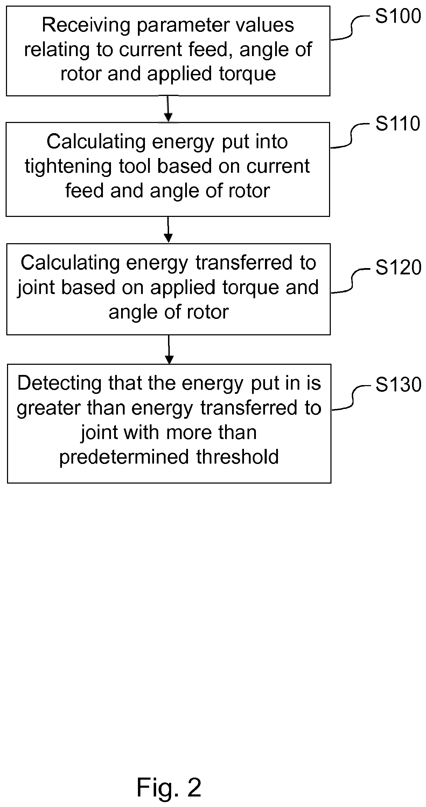

Turning now to **Fig. 2** a method performed by the monitoring node 100 will be described in more detail. The monitoring node 100 is associated with the tool communication network 50 for monitoring the energy flow in the tightening tools 125, 135 in for example an assembly line. As mentioned above the tightening tools 125, 135 are also connected to the communications network 50.

In a step, S100, of the method performed by the monitoring node 100, the monitoring node 100 receives, from the tightening tool 125, parameter values relating to current fed into the tightening tool 125, angle of a rotor in the tightening tool 125 and torque applied to a joint 80 by the tightening tool 125. As mentioned above the tightening tools 125, 135 are provided with different types of sensors with help of which the fed current, the rotor angle and applied torque may be directly or indirectly obtained. There are many possible sensors that may be used to obtain parameter values that are associated with the received parameter values. What is important in the context of the present invention is that the monitoring node 100 receives parameter values that are associated with the fed current, the rotor angle and applied torque.

Thereafter, in another step S110 the monitoring node calculates the energy put into to the tightening tool 125, 135 based on the received parameter values relating to the current fed into the tightening tool 125, 135 and the angle α of the rotor in the tightening tool.

In another step S120 the monitoring node 100 also calculates the energy transferred to the joint 80 by the tightening tool 125, 135 based on the received parameter values relating to the torque applied to the joint 80 by the tightening tool 125, 135 and the angle α of the rotor in the tightening tool 125, 135.

Based on these calculations, in step S110 and S120, the monitoring node 100 detects that the calculated energy put into to the tightening tool 125, 135 deviates from the calculated energy transferred to the joint 80 by the tightening tool 125, 135 with more than a predetermined value. For example the energy put into the tightening tool may be 10 kWh and the energy transferred to the joint 80 may be 8 kWh. In this case we have a deviation of 2 kWh or 20%. Thus, if the predetermined value is higher than 2 kWh or 20% the monitoring node 100 will detect the that the calculated energy put into to the tightening tool 125, 135 deviates from the calculated energy transferred to the joint 80 by the tightening tool 125, 135 with more than the predetermined value, i.e. 2kWh or 20%. The predetermined value may be an arbitrary value that is set by a production technician or the like. It should be noted that the energy values mention above only are used to illustrate an example and will depend on the type of tightening tool 125, 135 that is used.

By calculating the energy put into the tightening tool 125, 135 and the energy that the tightening tool 125, 135 transfers to the joint 80, 90 and then comparing these two a lot may be learned or understood. Energy losses and tightening power can be calculated. If there for example is an energy loss or lower tightening power this might indicate that that there is an error in the tightening tool 125, 135. Furthermore, energy loss in one tightening tool 125 might be compared to the energy loss of another tightening tool 135 or tightening tools. The total amount of energy passing through the tightening tool 125, 135 and the total energy lost in the tightening tool can for example be used as an indicator of tightening tool life. If the energy required to tighten for example a bolt 80, 90 increases it is an indication that there is something wrong. Maybe the properties of the bolt 80, 90 have changed due to a new batch of bolts or maybe a transducer of the tightening tool 125, 135 has lost its calibration. Thus, using the energy flowing into and out of the tool and usage of the calculated data makes it easier to gain understanding if the tightening tool 125, 135 is failing, needs calibration or maybe there are unexpected changes in the parts being assembled in the assembly line.

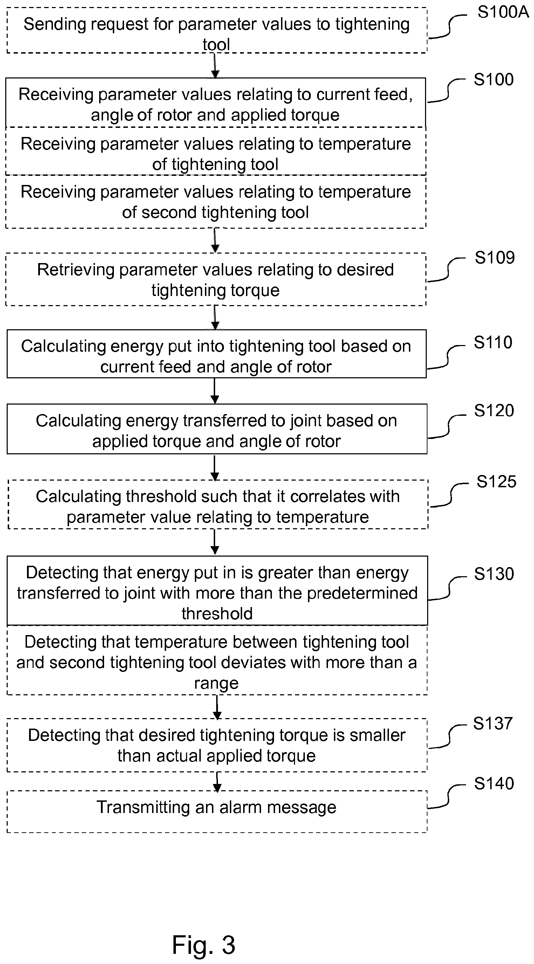

With reference to **Fig. 3** different embodiments and variations of the method performed by the monitoring node 100 will be will be closer described. The main steps described in conjunction with Fig. 2 are repeated in Fig. 3 and are shown with unbroken lines. Optional steps and variations are shown with dashed lines in Fig. 3.

In one embodiment the monitoring node 100 transmits, in step S140, an alarm message in response to detecting that the calculated energy put into to the tightening tool 125, 135 deviates from the calculated energy transferred to the joint 80 by the tightening tool 125, 135 with more than the predetermined value as mentioned above. This alarm message may be sent to the tool server 140 for storage and later access by the production manager or any other authorized person. The alarm message may also be sent to any other node in the communication network 50 or to any node connected thereto. The alarm message could for example be sent directly to a smart phone or any other device capable of receiving messages as a text message. Thus, be sending the alarm message it is possible to notify for example the production manager as soon as one discovers deviations larger than the predetermined value or threshold between energy put into to the tightening tool 125, 135 and the energy output by the tightening tool 125, 135. This gives the production manager an opportunity to go and observe how the tightening tool 125, 135 is used at a particular manufacturing station 120, 130 or by a particular operator.

In one embodiment the parameter values received in step S100, may be received more or less continuously or with regular intervals that are preprogrammed either in the tightening tool 125, 135 or in the tool controller 122, 123 controlling the tightening tool 125, 135. In another embodiment the parameter values are only received when requested by the monitoring node 100. Thus, in step S100A the monitoring node 100 sends a request for parameter values to the tightening tool 125, 135, via the communication network 50.

Another option when receiving parameter values in step S100, is to not only receive parameter values relating to current feed, angle of rotor and applied torque, but also receive parameter values relating to the temperature of the tightening tools 125, 135. The tightening tool temperature may be useful in order to perform other calculations which may be used to better diagnose what is wrong with the tightening tool 125, 135. For example in step S125 the monitoring mode 100 calculates the predetermined value such that it correlates with the parameter value relating to the temperature of the tightening tool 125, 135, i.e. increasing temperature leads to increasing the predetermined value. This is due to the fact that when the tightening tool 125, 135 becomes warmer it will lose more energy and the efficiency of the tightening tool 125, 135 decreases. However, in most cases, this is only natural and does not depend on a tightening tool error, but only on that the tightening tool is frequently used. Thus, by correlating the predetermined value with temperature the predetermined value will change dynamically with temperature and thus unnecessary alarm messages will not be sent in step S140. However, in one embodiment there might also be a threshold value above which the correlation no longer is made such that overheating of the tightening tool is avoided.

In yet another embodiment also a parameter value relating to a temperature of a second tightening tool 135 is received, from the second tightening tool 135 connected to the communication network 50. Furthermore, this embodiment comprises in step S130 detecting that the parameter value relating to the temperature of the tightening tool 125 deviates with more than a predetermined temperature range from the parameter value relating to the temperature of the second tightening tool 135. Comparing differences between different tightening tools might be useful when predicting tightening tool failure or material deficiencies. If the temperature of all tightening tools increases this may be an indication that there is a problem at the assembly line where the tools are located. If the temperature raises only for one tightening tool it is an indication that there is some problem at the manufacturing station of the tightening tool. The problem may either relate to the tightening tool itself or to some problems with the workpiece or parts thereof. If it possible to point out one specific tightening tool with elevated temperature the monitoring node 100 transmits in step S140 the alarm message comprising information about the deviation in the parameter values relating to the temperatures of the tightening tool 125 and the second tightening tool 135.

In another variation the method further comprises retrieving in step S109, a parameter value relating to desired tightening torque for tightening the joint 80. The monitoring node 100 then detects, in step S137, that the retrieved parameter value relating to the desired tightening torque deviates, from the received parameter value for the torque applied to the joint 80 by the tightening tool 125. With other words the applied torque is smaller than the desired tightening torque. This deviation triggers the transmission, in step S140, of the alarm message comprising information that the torque applied to the joint 80 is smaller than the desired tightening torque. This may indicate that the tightening tool needs to be recalibrated or that the tightening tool life is coming to an end.

Turning now to **Fig. 4** the monitoring node 100 be described closer. The monitoring node 100 comprises a processor 350, a memory 365 and a communication interface 370 for communication with other nodes and devices in the communication tool network 50, such as the tightening tools 125, 135.

Depending on the configuration the monitoring node 100 may further and as an option also comprise a repository 375. The repository may comprise historic data and/or different thresholds used to determine different types of errors or usage of the tightening tool and operator behavior of the tightening tool 125, 135. Fig. 4 further shows a computer program 365 comprising computer program code. The computer program code is adapted to implement the method steps, as described above, performed by the monitoring node 100 if executed on the processor 350. The computer program 365 may be stored on the memory 360, but may also be provided on a computer readable storage medium, such as a CD or a USB stick, that is loaded into the memory 360.

As mentioned above the monitoring node 100 is associated with the tool communication network 50, for monitoring the energy flow in the tightening tools 125, 135 and comprises the processor 350 and the memory 360. The memory 360 comprises instructions which when executed by the processor 350 causes the monitoring node 100 to receive, from the tightening tool 125, 135 parameter values relating to current fed into the tightening tool 125, 135 angle of a rotor in the tightening tool 125, 135 and torque applied to a joint 80 by the tightening 125, calculate the energy put into to the tightening tool 125, 135 based on the received parameter values relating to the current fed into the tightening tool 125, 135 and the angle of the rotor in the tightening tool 125, 135 and calculate the energy transferred to the joint 80 by the tightening tool 125 based on the received parameter values relating to the torque applied to the joint 80 by the tightening tool 125, 135 and the angle of the rotor in the tightening tool 125, 135. These calculations are then used by the monitoring node 100 to detect that the calculated energy put into to the tightening tool 125, 135 deviates from the calculated energy transferred to the joint 80 by the tightening tool 125, 135 with more than a predetermined value.

It should be understood that the monitoring node 100 is further configured to execute the computer program code of the computer program 365 such that the monitoring node 100 is caused to perform all of the method steps or actions described above in conjunction with Figs. 2 and 3. Thus, these steps are not repeated here.

The processor 350 may comprise a single Central Processing Unit (CPU), or could comprise two or more processing units. For example, the processor 350 may include general purpose microprocessors, instruction set processors and/or related chips sets and/or special purpose microprocessors such as Application Specific Integrated Circuits (ASICs), Field Programmable Gate Arrays (FPGAs) or Complex Programmable Logic Devices (CPLDs). The processor 350 may also comprise a storage for caching purposes.

The computer program may be carried by computer program products in the described monitoring node 100, in the form of memories having a computer readable medium and being connected to the processor 350. The computer program products may be carried by a medium, such as CD, DVD, flash memory, or downloadable objects. Each computer program product or memory thus comprises a computer readable medium on which the computer program is stored e.g. in the form of computer program units. For example, the memories may be a flash memory, a Random-Access Memory (RAM), a Read-Only Memory (ROM) or an Electrically Erasable Programmable ROM (EEPROM), and the program unit's u could in alternative embodiments be distributed on different computer program products in the form of memories within the described monitoring node 100 or within the tool communication network 50.

While the solution has been described with reference to specific exemplary embodiments, the description is generally only intended to illustrate the inventive concept and should not be taken as limiting the scope of the solution. For example, the terms "tool communications network", "monitoring node", "tool server", "tightening tool" and "tool controller" have been used throughout this description, although any other corresponding nodes, functions, and/or parameters could also be used having the features and characteristics described here. The solution is defined by the appended claims.

## Claims

1. A method performed by a monitoring node (100) associated with a tool communication network (50) of monitoring energy flow in a tightening tool (125) connected to the communications network (50), the method comprising:
- receiving (S100), from the tightening tool (125), parameter values relating to current fed (I) into the tightening tool (125), angle (α) of a rotor in the tightening tool (125) and torque (T) applied to a joint (80) by the tightening tool (125),
- calculating (S110) the energy put into the tightening tool (125) based on the received parameter values relating to the current fed (I) into the tightening tool (125) and the angle (α) of the rotor in the tightening tool (125),
- calculating (S120) the energy transferred to the joint (80) by the tightening tool (125) based on the received parameter values relating to the torque applied to the joint (80) by the tightening tool (125) and the angle (α) of the rotor in the tightening tool (125),
- detecting (S130) that the calculated energy put into to the tightening tool (125) deviates from the calculated energy transferred to the joint (80) by the tightening tool (125) with more than a predetermined value.

2. The method according to claim 1, further comprising
- transmitting (S140) an alarm message in response to detecting that the calculated energy put into to the tightening tool (125) deviates from the calculated energy transferred to the joint (80) by the tightening tool (125) with more than a predetermined value.

3. The method according to claim 1 or 2, further comprising:
- sending (S100A) a request for parameter values to the tightening tool (125), via the communication network (50).

4. The method according to any of claims 1 to 3, wherein the receiving step (S100) further comprises receiving, from the tightening tool (125), a parameter value relating to a temperature of the tightening tool (125), and
- calculating (S125) the predetermined value such that it correlates with the parameter value relating to the temperature of the tightening tool (125), i.e. increasing temperature leads to increasing predetermined value.

5. The method according to any of claims 1 to 4, wherein the receiving step (S100) further comprises receiving, from a second tightening tool (135) connected to the communication network (50), a parameter value relating to a temperature of the second tightening tool (135), the detecting step (S130) further comprises detecting that the parameter value relating to the temperature of the tightening tool (125) deviates with more than a predetermined temperature range from the parameter value relating to the temperature of the second tightening tool (135) and wherein transmitting (S140) the alarm message comprises transmitting information about the deviation in the parameter values relating to the temperatures of the tightening tool (125) and the second tightening tool (135).

6. The method according to any of claims 1 to 5, further comprising:
- retrieving (S109), a parameter value relating to desired tightening torque for tightening the joint (80), and
- detecting (S137) that the retrieved parameter value relating to the desired tightening torque deviates from the received parameter value for the torque (T) applied to the joint (80) by the tightening tool (125) and wherein transmitting (S140) the alarm message comprises transmitting information that the desired tightening torque deviates from the received parameter value for the torque (T) applied to the joint (80) by the tightening tool (125).

7. A monitoring node (100) associated with a tool communication network (50) for monitoring energy flow in a tightening tool (125) connected to the communications network (50), the monitoring node (100) comprising a processor (350) and a memory (360), the memory (360) comprising instructions which when executed by the processor (350) causes the monitoring node (100) to:
- receive, from the tightening tool (125), parameter values relating to current fed (I) into the tightening tool (125), angle (α) of a rotor in the tightening tool (125) and torque (T) applied to a joint (80) by the tightening (125),
- calculate the energy put into to the tightening tool (125) based on the received parameter values relating to the current fed (I) into the tightening tool (125) and the angle (α) of the rotor in the tightening tool (125),
- calculate the energy transferred to the joint (80) by the tightening tool (125) based on the received parameter values relating to the torque applied to the joint (80) by the tightening tool (125) and the angle (α) of the rotor in the tightening tool (125),
- detect that the calculated energy put into to the tightening tool (125) deviates from the calculated energy transferred to the joint (80) by the tightening tool (125) with more than a predetermined value.

8. The monitoring node (100) according to claim 7, which is further caused to:
- transmit (S140) an alarm message in response to detecting that the calculated energy put into to the tightening tool (125) deviates from the calculated energy transferred to the joint (80) by the tightening tool (125) with more than a predetermined value.

9. The monitoring node (100) according to claim 7 or 8, which is further caused to:
- send a request for parameter values to the tightening tool (125), via the communication network (50).

10. The monitoring node (100) according to any of claim 7 to 9, which is further caused to:
- receive, from the tightening tool (125), a parameter value relating to a temperature of the tightening tool (125), and
- calculate the predetermined value such that it correlates with the parameter value relating to the temperature of the tightening tool (125), i.e. increasing temperature leads to increasing predetermined value.

11. The monitoring node (100) according to any of claims 7 to 10, which is further caused to:
- receive, from a second tightening tool (135) connected to the communication network (50), a parameter value relating to a temperature of the second tightening tool (135), and
- detect that the parameter value relating to the temperature of the tightening tool (125) deviates with more than a predetermined temperature range from the parameter value relating to the temperature of the second tightening tool (135) and wherein transmitting the alarm message comprises transmitting information about the deviation in the parameter values relating to the temperatures of the tightening tool (125) and the second tightening tool (135).

12. The monitoring node (100) according to any of claims 7 to 9, which is further caused to:
- retrieve a parameter value relating to desired tightening torque for tightening the joint (80), and
- detect that the received parameter value relating to the desired tightening torque deviates from the received parameter value for the torque (T) applied to the joint (80) by the tightening tool (125) and wherein transmitting the alarm message comprises transmitting information that the desired tightening torque is smaller than the received parameter value for the torque (T) applied to the joint (80) by the tightening tool (125).

13. A computer program (365) comprising computer program code, the computer program code being adapted, if executed on a processor (350), to implement the method according to any one of the claims 1 to 6.

14. A computer program product comprising a computer readable storage medium (360), the computer readable storage medium having the computer program (365) according to claim 13.

## Patentansprüche

1. Verfahren, das von einem Überwachungsknoten (100), der einem Werkzeugkommunikationsnetzwerk (50) zugeordnet ist, ausgeführt wird, zum Überwachen des Energieflusses in einem mit dem Kommunikationsnetzwerk (50) verbundenen Anziehwerkzeug (125), wobei das Verfahren Folgendes umfasst:
- Empfangen (S100), von dem Anziehwerkzeug (125), von Parameterwerten in Bezug auf den in das Anziehwerkzeug (125) eingespeisten Strom (I), den Winkel (α) eines Rotors in dem Anziehwerkzeug (125) und das auf eine Verbindung (80) durch das Anziehwerkzeug (125) aufgebrachte Drehmoment (T),
- Berechnen (S110) der in das Anziehwerkzeug (125) eingebrachten Energie basierend auf den empfangenen Parameterwerten in Bezug auf den in das Anziehwerkzeug (125) eingespeisten Strom (I) und den Winkel (α) des Rotors im Anziehwerkzeug (125),
- Berechnen (S120) der von dem Anziehwerkzeug (125) auf die Verbindung (80) übertragenen Energie auf der Grundlage der empfangenen Parameterwerte in Bezug auf das vom Anziehwerkzeug (125) auf die Verbindung (80) ausgeübte Drehmoment und den Winkel (α) des Rotors im Anziehwerkzeug (125),
- Erfassen (S130), dass die berechnete Energie, die in das Anziehwerkzeug (125) eingespeist wird, um mehr als einen vorgegebenen Wert von der berechneten Energie abweicht, die von dem Anziehwerkzeug (125) auf die Verbindung (80) übertragen wird.

2. Verfahren nach Anspruch 1, ferner Folgendes umfassend:
- Senden (S140) einer Alarmmeldung als Reaktion auf das Erfassen, dass die berechnete Energie, die in das Anziehwerkzeug (125) eingespeist wird, um mehr als einen vorgegebenen Wert von der berechneten Energie abweicht, die von dem Anziehwerkzeug (125) auf die Verbindung (80) übertragen wird.

3. Verfahren nach Anspruch 1 oder 2, ferner Folgendes umfassend:
- Senden (S100A) einer Anforderung für Parameterwerte an das Anziehwerkzeug (125) über das Kommunikationsnetzwerk (50).

4. Verfahren nach einem der Ansprüche 1 bis 3, wobei der Empfangsschritt (S100) ferner Folgendes umfasst: Empfangen, von dem Anziehwerkzeug (125), eines Parameterwerts, der sich auf eine Temperatur des Anziehwerkzeugs (125) bezieht, und
- Berechnen (S125) des vorbestimmten Wertes derart, dass er mit dem Parameterwert korreliert, der sich auf die Temperatur des Anziehwerkzeugs (125) bezieht, d. h. eine Erhöhung der Temperatur führt zu einer Erhöhung des vorbestimmten Werts.

5. Verfahren nach einem der Ansprüche 1 bis 4, wobei der Empfangsschritt (S100) ferner das Empfangen, von einem zweiten Anziehwerkzeug (135), das mit dem Kommunikationsnetzwerk (50) verbunden ist, eines Parameterwerts, der sich auf eine Temperatur des zweiten Anziehwerkzeugs (135) bezieht, umfasst, wobei der Erfassungsschritt (S130) ferner das Erfassen umfasst, dass der Parameterwert, der sich auf die Temperatur des Anziehwerkzeugs (125) bezieht, um mehr als einen vorbestimmten Temperaturbereich von dem Parameterwert abweicht, der sich auf die Temperatur des zweiten Anziehwerkzeugs (135) bezieht, und wobei das Senden (S140) der Alarmmeldung das Senden von Informationen über die Abweichung der Parameterwerte in Bezug auf die Temperatur des Anziehwerkzeugs (125) und des zweiten Anziehwerkzeugs (135) umfasst.

6. Verfahren nach einem der Ansprüche 1 bis 5, ferner Folgendes umfassend:
- Abrufen (S109) eines Parameterwerts, der sich auf das gewünschte Anzugsmoment zum Festziehen der Verbindung (80) bezieht, und
- Erfassen (S137), dass der abgerufene Parameterwert, der sich auf das gewünschte Anzugsmoment bezieht, von dem empfangenen Parameterwert für das von dem Anziehwerkzeug (125) auf die Verbindung (80) ausgeübte Drehmoment (T) abweicht und wobei das Senden (S140) der Alarmmeldung das Senden von Informationen darüber umfasst, dass das gewünschte Anzugsdrehmoment von dem empfangenen Parameterwert für das durch das Anziehwerkzeug (125) auf die Verbindung (80) ausgeübte Drehmoment (T) abweicht.

7. Überwachungsknoten (100), der einem Werkzeugkommunikationsnetzwerk (50) zugeordnet ist, zum Überwachen des Energieflusses in ein mit dem Kommunikationsnetzwerk (50) verbundenes Anziehwerkzeug (125), wobei der Überwachungsknoten (100) einen Prozessor (350) und einen Speicher (360) umfasst, wobei der Speicher (360) Anweisungen umfasst, die, wenn sie von dem Prozessor (350) ausgeführt werden, den Überwachungsknoten (100) veranlassen zum:
- Empfangen, von dem Anziehwerkzeug (125), von Parameterwerten in Bezug auf den in das Anziehwerkzeug (125) eingespeisten Strom (I), den Winkel (α) eines Rotors in dem Anziehwerkzeug (125) und das auf eine Verbindung (80) durch das Anziehwerkzeug (125) aufgebrachte Drehmoment (T),
- Berechnen der in das Anziehwerkzeug (125) eingebrachten Energie basierend auf den empfangenen Parameterwerten in Bezug auf den in das Anziehwerkzeug (125) eingespeisten Strom (I) und den Winkel (α) des Rotors im Anziehwerkzeug (125),
- Berechnen der von dem Anziehwerkzeug (125) auf die Verbindung (80) übertragenen Energie auf der Grundlage der empfangenen Parameterwerte in Bezug auf das vom Anziehwerkzeug (125) auf die Verbindung (80) ausgeübte Drehmoment und den Winkel (α) des Rotors im Anziehwerkzeug (125),
- Erfassen, dass die berechnete Energie, die in das Anziehwerkzeug (125) eingespeist wird, um mehr als einen vorgegebenen Wert von der berechneten Energie abweicht, die von dem Anziehwerkzeug (125) auf die Verbindung (80) übertragen wird.

8. Überwachungsknoten (100) nach Anspruch 7, der ferner veranlasst wird zum:
- Senden (S140) einer Alarmmeldung als Reaktion auf das Erfassen, dass die berechnete Energie, die in das Anziehwerkzeug (125) eingespeist wird, um mehr als einen vorgegebenen Wert von der berechneten Energie abweicht, die von dem Anziehwerkzeug (125) auf die Verbindung (80) übertragen wird.

9. Überwachungsknoten (100) nach Anspruch 7 oder 8, der ferner veranlasst wird zum:
- Senden einer Anforderung für Parameterwerte an das Anziehwerkzeug (125) über das Kommunikationsnetzwerk (50).

10. Überwachungsknoten (100) nach einem der Ansprüche 7 bis 9, der ferner veranlasst wird zum:
- Empfangen, von dem Anziehwerkzeug (125), eines Parameterwerts, der sich auf eine Temperatur des Anziehwerkzeugs (125) bezieht, und
- Berechnen es vorbestimmten Wertes derart, dass er mit dem Parameterwert korreliert, der sich auf die Temperatur des Anziehwerkzeugs (125) bezieht, d. h. eine Erhöhung der Temperatur führt zu einer Erhöhung des vorbestimmten Werts.

11. Überwachungsknoten (100) nach einem der Ansprüche 7 bis 10, der ferner veranlasst wird zum:
- Empfangen, von einem zweiten Anziehwerkzeug (135), das mit dem Kommunikationsnetzwerk (50) verbunden ist, eines Parameterwerts, der sich auf eine Temperatur des zweiten Anziehwerkzeugs (135) bezieht, und
- Erfassen, dass der Parameterwert, der sich auf die Temperatur des Anziehwerkzeugs (125) bezieht, um mehr als einen vorbestimmten Temperaturbereich von dem Parameterwert abweicht, der sich auf die Temperatur des zweiten Anziehwerkzeugs (135) bezieht, und wobei das Senden der Alarmmeldung das Senden von Informationen über die Abweichung der Parameterwerte in Bezug auf die Temperatur des Anziehwerkzeugs (125) und des zweiten Anziehwerkzeugs (135) umfasst.

12. Überwachungsknoten (100) nach einem der Ansprüche 7 bis 9, der ferner veranlasst wird zum:
- Abrufen eines Parameterwerts, der sich auf das gewünschte Anzugsmoment zum Festziehen der Verbindung (80) bezieht, und
- Erfassen, dass der empfangene Parameterwert, der sich auf das gewünschte Anzugsmoment bezieht, von dem empfangenen Parameterwert für das von dem Anziehwerkzeug (125) auf die Verbindung (80) ausgeübte Drehmoment (T) abweicht und wobei das Senden der Alarmmeldung das Senden von Informationen darüber umfasst, dass das gewünschte Anzugsdrehmoment kleiner ist als der empfangene Parameterwert für das durch das Anziehwerkzeug (125) auf die Verbindung (80) ausgeübte Drehmoment (T).

13. Computerprogramm (365), umfassend Computerprogrammcode, wobei der Computerprogrammcode angepasst ist, um bei Ausführung auf einem Prozessor (350) das Verfahren nach einem der Ansprüche 1 bis 6 zu implementieren.

14. Computerprogrammprodukt, umfassend ein computerlesbares Speichermedium (360), wobei das computerlesbare Speichermedium das Computerprogramm (365) nach Anspruch 13 aufweist.

## Revendications

1. Procédé effectué par un nœud de surveillance (100) associé à un réseau de communication d'outil (50) destiné à surveiller du flux d'énergie dans un outil de serrage (125) connecté au réseau de communication (50), le procédé comprenant :
- la réception (S100), à partir de l'outil de serrage (125), de valeurs de paramètres relatives au courant introduit (I) dans l'outil de serrage (125), l'angle (α) d'un rotor dans l'outil de serrage (125) et le couple (T) appliqué à un joint (80) par l'outil de serrage (125),
- le calcul (S110) de l'énergie apportée dans l'outil de serrage (125) sur la base des valeurs de paramètres reçues relatives au courant introduit (I) dans l'outil de serrage (125) et l'angle (α) du rotor dans l'outil de serrage (125),
- le calcul (S120) de l'énergie transférée au joint (80) par l'outil de serrage (125) sur la base des valeurs de paramètres reçues relatives au couple appliqué au joint (80) par l'outil de serrage (125) et l'angle (α) du rotor dans l'outil de serrage (125),
- la détection (S130) du fait que l'énergie calculée introduite dans l'outil de serrage (125) s'écarte de l'énergie calculée transférée au joint (80) par l'outil de serrage (125) par plus d'une valeur prédéterminée.

2. Procédé selon la revendication 1, comprenant en outre
- la transmission (S140) d'un message d'alarme en réponse à la détection que l'énergie calculée fournie à l'outil de serrage (125) s'écarte de l'énergie calculée transférée au joint (80) par l'outil de serrage (125) par plus d'une valeur prédéterminée.

3. Procédé selon la revendication 1 ou 2, comprenant en outre :
- l'envoi (S100A) d'une demande de valeurs de paramètres à l'outil de serrage (125) par l'intermédiaire du réseau de communication (50).

4. Procédé selon l'une quelconque des revendications 1 à 3, dans lequel l'étape de réception (S100) comprend en outre la réception, à partir de l'outil de serrage (125), d'une valeur de paramètre relative à une température de l'outil de serrage (125), et
- le calcul (S125) de la valeur prédéterminée de telle sorte qu'elle est corrélée avec la valeur de paramètre relative à la température de l'outil de serrage (125), c'est-à-dire qu'une augmentation de la température conduit à une augmentation de la valeur prédéterminée.

5. Procédé selon l'une quelconque des revendications 1 à 4, dans lequel l'étape de réception (S100) comprend en outre la réception, à partir d'un second outil de serrage (135) connecté au réseau de communication (50), d'une valeur de paramètre relative à une température du second outil de serrage (135), l'étape de détection (S130) comprenant en outre la détection du fait que la valeur de paramètre relative à la température de l'outil de serrage (125) s'écarte de plus d'une plage de température prédéterminée de la valeur de paramètre relative à la température du second outil de serrage (135) et dans lequel la transmission (S140) du message d'alarme comprend la transmission d'informations sur l'écart des valeurs de paramètre relatives aux températures de l'outil de serrage (125) et du second outil de serrage (135).

6. Procédé selon l'une quelconque des revendications 1 à 5, comprenant en outre :
- la récupération (S109) d'une valeur de paramètre relative au couple de serrage souhaité pour serrer le joint (80), et
- la détection (S137) du fait que la valeur de paramètre récupérée relative au couple de serrage souhaité s'écarte de la valeur de paramètre reçue pour le couple (T) appliqué au joint (80) par l'outil de serrage (125) et dans lequel la transmission (S140) du message d'alarme comprend la transmission d'informations indiquant que le couple de serrage souhaité s'écarte de la valeur de paramètre reçue pour le couple (T) appliqué au joint (80) par l'outil de serrage (125).

7. Nœud de surveillance (100) associé à un réseau de communication d'outil (50) destiné à surveiller le flux d'énergie dans un outil de serrage (125) connecté au réseau de communication (50), le nœud de surveillance (100) comprenant un processeur (350) et une mémoire (360), la mémoire (360) comprenant des instructions qui, lorsqu'elles sont exécutées par le processeur (350), amènent le nœud de surveillance (100) à :
- recevoir, à partir de l'outil de serrage (125), des valeurs de paramètres relatives au courant introduit (I) dans l'outil de serrage (125), l'angle (α) d'un rotor dans l'outil de serrage (125) et le couple (T) appliqué à un joint (80) par le serrage (125),
- calculer l'énergie apportée à l'outil de serrage (125) sur la base des valeurs de paramètres reçues relatives au courant introduit (I) dans l'outil de serrage (125) et à l'angle (α) du rotor dans l'outil de serrage (125),
- calculer l'énergie transférée au joint (80) par l'outil de serrage (125) sur la base des valeurs de paramètres reçues relatives au couple appliqué au joint (80) par l'outil de serrage (125) et à l'angle (α) du rotor dans l'outil de serrage (125),
- détecter que l'énergie calculée appliquée à l'outil de serrage (125) s'écarte de l'énergie calculée transférée au joint (80) par l'outil de serrage (125) d'une valeur supérieure à une valeur prédéterminée.

8. Nœud de surveillance (100) selon la revendication 7, qui est en outre amené à :
- transmettre (S140) un message d'alarme en réponse à la détection du fait que l'énergie calculée appliquée à l'outil de serrage (125) s'écarte de l'énergie calculée transférée au joint (80) par l'outil de serrage (125) par plus d'une valeur prédéterminée.

9. Nœud de surveillance (100) selon la revendication 7 ou 8, qui est en outre amené à :
- envoyer une demande de valeurs de paramètres à l'outil de serrage (125) par l'intermédiaire du réseau de communication (50).

10. Nœud de surveillance (100) selon l'une quelconque des revendications 7 à 9, qui est en outre amené à :
- recevoir, à partir de l'outil de serrage (125), une valeur de paramètre relative à une température de l'outil de serrage (125), et
- calculer la valeur prédéterminée de telle sorte qu'elle soit corrélée à la valeur de paramètre relative à la température de l'outil de serrage (125), c'est-à-dire qu'une augmentation de la température conduit à une augmentation de la valeur prédéterminée.

11. Nœud de surveillance (100) selon l'une quelconque des revendications 7 à 10, qui est en outre amené à :
- recevoir, à partir d'un second outil de serrage (135) connecté au réseau de communication (50), une valeur de paramètre relative à une température du second outil de serrage (135), et
- détecter que la valeur de paramètre relative à la température de l'outil de serrage (125) s'écarte par plus d'une plage de température prédéterminée de la valeur de paramètre relative à la température du second outil de serrage (135) et dans lequel la transmission du message d'alarme comprend la transmission d'informations sur l'écart des valeurs de paramètres relatifs aux températures de l'outil de serrage (125) et du second outil de serrage (135).

12. Nœud de surveillance (100) selon l'une quelconque des revendications 7 à 9, qui est en outre amené à :
- récupérer une valeur de paramètre relative au couple de serrage souhaité pour serrer le joint (80), et
- détecter que la valeur de paramètre reçue relative au couple de serrage souhaité s'écarte de la valeur de paramètre reçue pour le couple (T) appliqué au joint (80) par l'outil de serrage (125) et dans lequel la transmission du message d'alarme comprend la transmission d'informations que le couple de serrage est inférieur à la valeur de paramètre reçue pour le couple (T) appliqué au joint (80) par l'outil de serrage (125).

13. Programme informatique (365) comprenant un code de programme informatique, le code de programme informatique étant conçu, s'il est exécuté sur un processeur (350), pour mettre en œuvre le procédé selon l'une quelconque des revendications 1 à 6.

14. Produit de programme informatique comprenant un support de stockage lisible par ordinateur (360), le support de stockage lisible par ordinateur comportant le programme informatique (365) selon la revendication 13.
